# EUROPEAN PATENT APPLICATION

(11) **EP 1 050 859 A2**
(43) Date of publication of application: **08.11.2000**
(21) Application number: 00303538.3
(22) Date of filing: 27.04.2000
(51) Int. Cl.: G07F 7/10

(54) **Payment apparatus and method**

(30) Priority: 05.05.1999 GB 9910418; 30.03.2000 GB 0007796
(71) Applicant: LANDIS & GYR COMMUNICATIONS (U.K.) LTD., Camberley, Surrey GU15 2PL (GB)
(72) Inventor: Brennan, Martin Francis, Wokingham, Berkshire RG41 4WR (GB); Heslop, Philip John, Wokingham, Berkshire RG41 1PW (GB); Wilkes, Jeffery Frederick, Ashtead, Surrey KT21 1SL (GB)
(74) Representative: BROOKES & MARTIN

(57) **Abstract**

Apparatus (200) for payment for goods and/or services comprising: payment accepting apparatus (202, 204, 206) for accepting from a user cash and/or a token with a cash value, said payment accepting apparatus being couplable to a telephone network (208); and a base station (212), also couplable to the telephone network, for receiving telephone calls from the payment accepting apparatus; the payment accepting apparatus having means operable to telephone the base station, to identify the user and to identify a provider of the goods and/or services; the base station being further configured to receive from the payment accepting apparatus information indicating a value of cash and/or a token or tokens provided by the user and to make the information available to the provider of the goods and/or services (226, 228).

## Description

This invention generally relates to apparatus and methods for payment for goods and/or services. More particularly it relates to arrangements for collecting cash, and/or tokens with a cash value, remotely on behalf of a provider of the goods and/or services.

In today's society the use of a bank account and credit and debit cards can appear ubiquitous and it is often taken for granted that a potential customer of goods and services will have this means of payment available. However, there is a significant fraction of the population who either do not have access to, or do not wish to use such facilities. It is nevertheless desirable economically for companies to have access to this significant sector of the market which, heretofore, has tended to be overlooked. One problem which arises in this context is that of providing this sector of the market with access to electronic commerce facilities such as are available to credit and debit card holders. A technical solution to this problem will be described, based in part on the appreciation that in most developed countries there is a well-established infrastructure of pay telephones.

According to the present invention there is provided an apparatus for payment for goods and/or services comprising: payment accepting apparatus for accepting from a user cash and/or a token with a cash value, said payment accepting apparatus being couplable to a telephone network; and a base station, also couplable to the telephone network, for receiving telephone calls from the payment accepting apparatus; the payment accepting apparatus having means operable to telephone the base station, to identify the user and to identify a provider of the goods and/or services; the base station being further configured to receive from the payment accepting apparatus information indicating a value of cash and/or a token or tokens provided by the user and to make the information available to the provider of the goods and/or services.

According to a second aspect of the invention there is provided a method of payment for goods and/or services by a user, for use with payment accepting apparatus and a base station, both coupled to a telephone network; the method comprising the steps of controlling the payment accepting apparatus to originate a telephone call to the base station; answering the telephone call at the base station; identifying the user and a provider of the goods and/or services to the base station; accepting, using the payment accepting apparatus, cash and/or a token with a cash value from the user; transmitting, from the payment accepting apparatus to the base station, information indicating a value of cash and/or token or tokens provided by the user; and making the information available to the provider of the goods and/or services.

According to a third aspect of the invention there is provided a payment authorisation system comprising payment accepting apparatus and first and second computer systems, operable to communicate with one another over a network; the first computer system including means to acquire, from the payment accepting apparatus, information specifying an amount of money input by a user of the payment accepting apparatus and means to communicate this information to the second computer system; the second computer system including means to authorise the provision of goods and/or services to the value of the amount of money input by the user.

According to a fourth aspect of the invention there is provided a method of enabling access to a mobile telephone service comprising: receiving money from a user of the service at a payment accepting apparatus; communicating the value of money received, over a telephone network, to a base station; and enabling access or additional access to the mobile telephone service, to the value of the money received.

The payment accepting apparatus may be a vending machine but is preferably a payphone, although in this latter case the handset need not be used. Payment may be made by cash, for example. coins and/or notes, or by a token or tokens such as a prepaid phone card. The telephone number dialled by the payment accepting apparatus in response to the user may itself identify the provider of the goods or services for example, different numbers may indicate may indicate different providers but may access a common base station. The user may operate the payment accepting apparatus directly, for example by pressing a button on the apparatus, to telephone the base station, or the payment accepting apparatus may operate in a different mode in which the base station to dial-up is known to the apparatus and in which the payment accepting apparatus keeps a record of cash inserted by successive people and dials up the base station at intervals to transmit a summary of the payments received.

Typically a telephone network will provide caller line identification (CLI) information which is usable to check the telephone number of the payment accepting apparatus. This assists in preventing fraudulent use since physical access to the correct line (and hence telephone number) is required. The telephone number of the payment accepting apparatus (i.e. the CLI information) may itself identify the user, for example, where the apparatus is installed on domestic premises, or the user may enter an identifying code, for example using the telephone keypad. The system may instead of (or as well as) identifying a user, identify a group or association of users, such as a lottery syndicate. If the apparatus is installed in domestic premises and is collecting money on behalf of a third party or parties, the user will not normally have access to any cash which may be stored within the payment accepting apparatus. Additionally or alternatively, the base station can be configured to authenticate the user's identity rather than the identity of the payment receiving apparatus. In this case the user may be required to enter a personal identification number (pin) which would identify the user and ensure that the goods and/or services were provided specifically to that user.

The value of cash and/or tokens provided by the user is indicated to the base station either directly or in an encoded format, and may also be locally displayed to the user. The base station will typically store and/or transmit information to the designated provider of the goods/services specifying the amount of money provided by the user. This amount of money can then be credited to the user's account, either for paying off a debt, or for immediate or future provision of goods/services. In one embodiment, the base station communicates to a mobile telephone service provider to enable the user to pay in cash, via a payphone, for a prepaid mobile telephone service. If desired, a sum can be deducted for access to the remote payment service. The system can also be used for home shopping and for savings deposits and other remote access banking services.

The system can be arranged to include a number of security features. In one embodiment, the payment accepting apparatus transmits a security code, for example a random number, to the base station where it can be checked to validate that an authenticated payment accepting apparatus is connected to the line. To prevent monitoring and copying of such a code the base station may transmit back a security code to the payment receiving apparatus and the next random number transmitted to the base station can then be calculated based upon the previous number supplied by the base station. The security code can thus be arranged to change at predetermined intervals, for example at each access to the base station.

The security code can be encoded onto the telephone line in any conventional way, for example through the use of DTMF (Dual Tone Multi-Frequency) tones. If greater security is required, public key encryption and/or key escrow arrangements can be employed as used, for example, in some GSM-type mobile telephone networks.

Other security features can include can include placing a "credit limit" on the goods and/or services provided to any one user and performing a consistency check based upon the amount of cash held by a particular payphone. For example, if a payphone holds £100 and has made £50 worth of calls, users, in total, should have obtained £50 worth of goods and/or service from providers. If the base station records that it has issued £100 worth of goods/services to users of that payphone this could indicate possible fraud.In one embodiment, for coin and/or card operated payphones, a payphone terminal, in conjunction with special signaling and payment authentication processes, is used to provide payment for a range of services. These payment services may include, as an indicative but not exhaustive Est, prepaid mobile phone credit top up; home shopping; and remote access banking, and savings deposit.

In operation the user, after lifting the payphone handset, depresses a 'dedicated function key' on the payphone, for example, a memory dial key pre-programmed with the service provider's telephone number. Thus multiple services may be provided from one payphone, limited only by the availability of 'dedicated function keys'. Following out-signaling of the service provider's telephone number, the payphone displays a fee value for the service being purchased.

In addition to the fee prompt provided at the payphone, the service provider may provide a voice prompt to guide the user through the sequence of operations and to reassure the user that the service is functional prior to the user making payment The user then provides payment for the service using the payment means provided, for example. coin or card. In some applications the credit is held in escrow pending the final successful conclusion of the transaction.

Following payment the payphone provides signaling to the service provider to provide payment authentication. A voice prompt is then provided by the service provider to prompt the user to enter, via the payphone keypad, the details pertinent to the transaction. Examples of such details include:
the account number for a pre-paid mobile phone service; a catalogue number for an item to be purchased; and/or
a savings account number.

The user's data is transmitted as keyed, to the service provider. Following this process, a voice prompt from the service provider is used to indicate conclusion of the transaction. Additionally, signaling from the service provider may be used to initiate collection of coins from escrow or to close a card transaction. Alternatively, the voice prompt can be used to prompt for re-entry of the user's data following detection of an error.

The overall transaction time is preferably limited, by the payphone, to an appropriate value, to prevent unnecessary use of service provider equipment and thus congestion.

Preferably the system is used with a 'managed payphone', that is one which supports remote reporting, from the payphone, of audit data and faults, and remote configuration of the payphone for tariffs and operation parameters. The managed capability of the payphone may be used, for example, as follows:
to provide cash counters for each function key-,
to allow for remote adjustment of the service provider telephone numbers; to allow for remote adjustment of fees; and/or
to allow for remote adjustment of a PIN number associated with authentication of transactions at the payphone.

A range of security measures can be employed, according to the demands of an application. The security of both the service provider and the user should be considered.

In one embodiment the service provider's telephone number is not displayed and its out-signaling is not coupled to the telephone earpiece (which would allow its detection, for example, by an acoustically-coupled DTN4F detector).

The service provider's telephone number is advantageously capable of periodic, remote alteration, for example, over the PSTN (Public Service Telephone Network) via a payphone management system. The handset microphone is preferably muted throughout the entire transaction, to prevent fraudulent acoustically-coupled injection of tones through the microphone with an intention to mimic payphone-generated authentication sequences.

Following payment, the payphone preferably provides signaling with the service provider to provide payment authentication. The particular technique used may be chosen to provide an adequate level of security against fraudulent operation. Some suitable techniques include:
signaling by the payphone to the service provider of an agreed tone sequence, for example the 'operator notification tone' specified in OFTEL payphone approval requirements;
a challenge/response authentication handshake using a random number challenge from the service provider, in conjunction with an encryption algorithm; and/or
a simple PIN-encryption scheme using a predetermined remote PIN combined (for example by exclusive OR) with another data item subject to constant change but known at both ends of the data link (for example a component of the real time).

The primary risk for the user is loss of money, either as a result of a service-provider malfunction or as a result of erroneous use of the service by the user. The implementation of the system can, therefore, allow for remote enable/disable of the service in order to prevent coin acceptance/card transaction in the event that the service is unavailable. In addition, as stated above, signaling from the service provider may be used to initiate collection of coins from escrow or to close a card transaction.

Another risk to the user is the divulging of confidential user-data such as account numbers. Where this is a problem the risk may be reduced by, inter alia, suppression of the pay-phone dialed-number display.

Other than the possible, but not essential, provision of special signaling techniques, the payphone is implementable as a software variant of an existing product. A preferred product includes a microprocessor control system and MODEM for remote configuration purposes.

At the physical layer, one or more of the following signalling techniques may be used:
uni-directional tone signaling (this requires no extra payphone hardware);
bi-directional DTMF signaling (this requires extra payphone hardware, familiar to those skilled in the art);
out of band signaling using 'data over voice' MODEM techniques in conjunction with special equipment at the service provider (this requires extra payphone hardware, familiar to those skilled in the art);
high frequency meter pulses in conjunction with special equipment at the service provider (this requires extra payphone hardware, familiar to those skilled in the art).

The choice of technique is a design decision dictated, in part, by the needs of the service provider.

These and other aspects of the present invention will now be further described, by way of example only, with reference to the accompanying drawings in which:
Figure I shows a payphone suitable for use with the described payment system:
Figure 2 shows a flow diagram of a service payment call from a payphone in accordance with a first embodiment of the invention;
Figure 3 shows a simplified system block diagrameFigure 4 shows a flow diagram of a service payment call from a payphone in accordance with a second embodiment of the invention, and
Figure 5 shows a flow diagram of a service payment call from a payphone in accordance with a third embodiment of the invention.

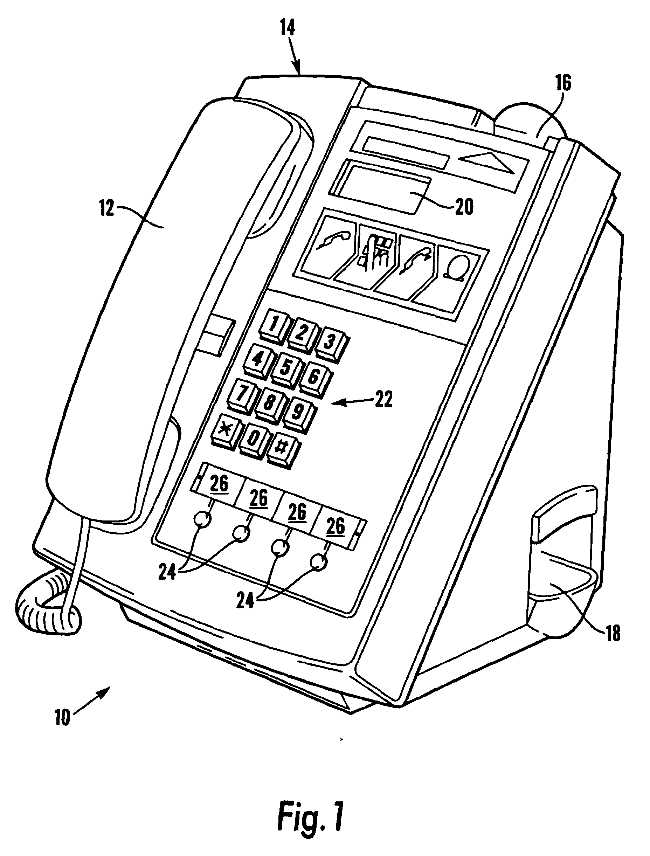

Referring first to Figure 1, this illustrates a typical indoor payphone 10 of a type suitable to be used as part of the overall system apparatus. It comprises a handset 12 and a body 14 with a coin slot 16 and a coin reject chute 80. The payphone has a display 20, typically a numerical or alphanumeric liquid crystal display, and a standard numeric keypad 22. The payphone also has, in the illustrated embodiment, four programmable keys 24 (also known as "memory buttons") above which are spaces 26 for displaying labels for these keys. The physical form of the payphone will depend upon whether the payphone is for indoor or outdoor use, the degree of security required, and upon other factors. An internal mechanism checks the validity of coins input by a user, calculating the value of valid coins and refunding invalid coins; if desired other forms of payment, such as phonecards, credit cards, Switch (debit cards), electronic money or notes, may also be accepted by means of the use of a "swipe" mechanism. A preferred payphone is battery-operated and includes an internal modem to communicate with a payphone management system computer.

Alternative modes of operation of the payphone are available. In a first mode of operation the payphone operates in "escrow" mode. In this mode a user inserts money into the payphone before dialing and this is held within the payphone by an electromagnetic gate. The money is dispensed into a cash box (not shown in Figure 1) when a call is connected and otherwise refunded. In a second, pay-on-answer mode the user pays the amount shown on the display 20 when the user's call is answered. The skilled person will understand that other modes of operation are also possible.

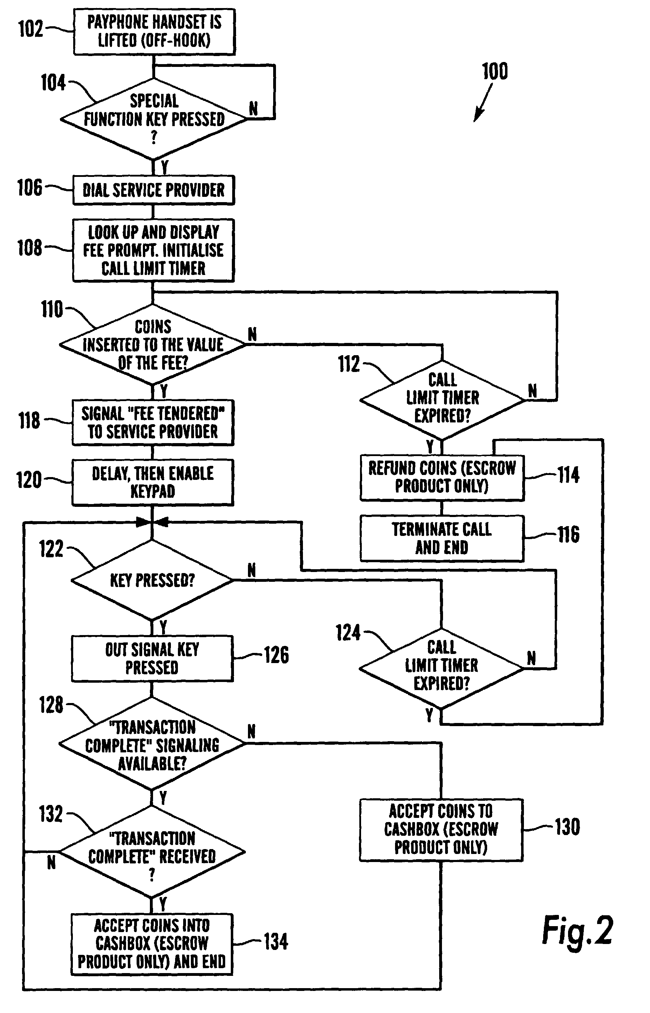

Figure 2 shows a flow diagram 100 illustrating operation of such a payphone to remotely pay for a service from a service provider. At block 102 the user lifts handset 12 off hook after which the payphone waits, at 104, in a loop until a special function key (such as a memory button 24) is pressed. The flow diagram is simplified and does not show aspects of conventional payphone operation or use.

When a predetermined function key is pressed, the payphone dials up the service provider at 106. The call is preferably a free call such as, in the UK, a call to an 0800 number. If the call is not free, payment can be by the user or by an arrangement between the PSTN (Public Telephone Network) operator and/or the payphone provider and/or the service provider. The service provider, in one embodiment is a provider of a prepaid mobile telephone service. Although block 106 shows the service provider being dialed directly, the payphone can alternatively originate a call to the payphone provider or some other third party.

The response, either directly from the service provider or from a base station (see below) is typically an interactive voice response such as "Welcome to Service X prepay. If you would like to pay for another two weeks of usage please deposit £2 now". Additionally or alternatively a visual prompt may be provided on display 20. At block 108 the payphone retrieves over the dial-up connection, and displays, a fee prompt such as "Please deposit £2" and initialises a call limit timer. The call limit timer is an optional feature but helps to restrict unnecessary use of service provider and/or base station equipment and thus avoid congestion.

At block 110 the payphone monitors the value of coins inserted in the usual way, preferably calculating and displaying a running total. Whilst coins to the correct value are being inserted the payphone loops through block 112 to check whether the call limit timer has expired. If the timer expires before coins to the value of the fee have been inserted, coins are refunded at 114 ("escrow" product only), the call is terminated at 116, and the procedure ended. If, however, coins to the correct value are inserted before the timer expires the payphone provides a "Fee Tendered" signal at 118 to the base station/service provider.

The payphone waits at 120 for a short interval to allow the base station time to register and process the "Fee Tendered" signal; this will typically be a few seconds. Telephone keypad 22 is then enabled so that the user can send DTNIF digit codes over the PSTN to the base station/service provider. At 122 the payphone waits for a key to be pressed, in a loop which includes a check, at 124, on the call limit timer. If the timer expires, coins are refunded at 114 and the call ended at 116, as described above. The service provider is either notified, or is aware, that the transaction did not complete properly, if the call limit timer does not expire and an outsignal key press is detected at 126, the appropriate digit code is placed on the line to the payphone.

Single level and multi-level operation is envisaged. In single level operation, at the end of a call an acknowledgement will be provided to the user and the call ended, either by the base station or by the payphone on receipt of a line-drop signal. In multi-level operation, additional features and/or services are provided after the payment transaction, to allow the user to order further goods/services from another source or, for example, to speak to a human assistant. In such a case the user will typically be provided with a message such as "You have now deposited IX Please press I for further services and 2 for help".

Signaling to indicate "transaction complete" from the base station/service provider may or may not be provided. Such signaling may be implemented as a single tone or as a DTMF tone transmitted to the payphone. At block 128, if no such signaling is available the payphone accepts the coins entered by the user to the cash box 130. Alternatively, if such signaling is available, the payphone checks at 132 to see whether this signal has been received and if it has not been received waits by looping back to block 122. When a transaction complete signal is received, the payphone accepts the coins into the cash box at 134 and terminates the procedure.

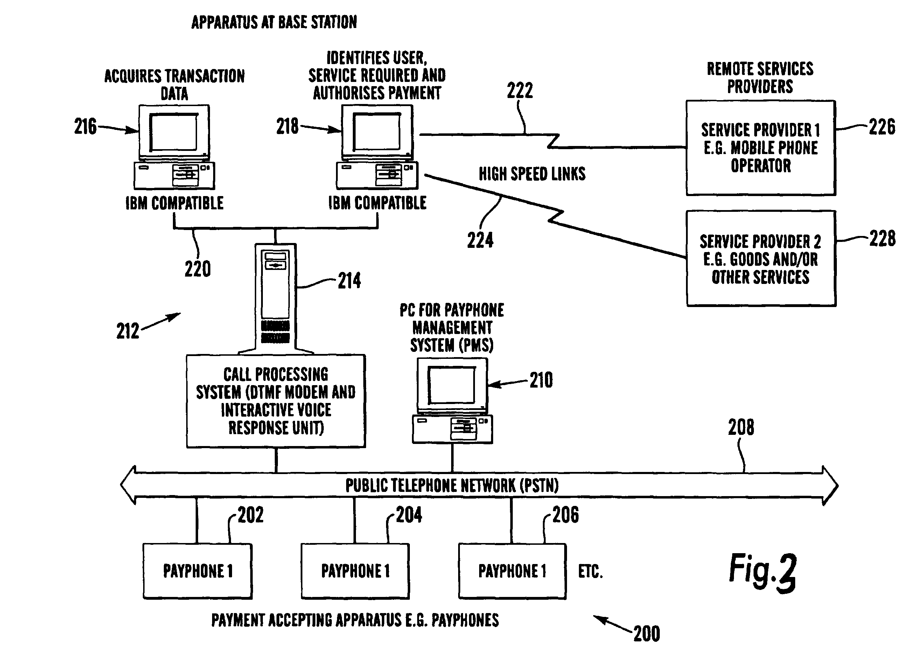

Figure 3 illustrates a simplified block diagram 200 of the components of an exemplary payment system. Payphones 202, 204 and 206 are coupled to the public telephone network (PSTN) 208, to which is also connected a payphone management computer 2 10 for remote management of the payphones. In a preferred embodiment the payphones call up management computer 210 every night and download cash and audit information to this computer together with status reports to indicate events such as a fun cash box, a stuck coin, and a flat battery. Other payphone status information can also be provided together with utilisation statistics, traffic analysis, and memory button usage information. Computer 210 may also be usable to program numbers dialed by the special function keys 24 and to update the payphone software as needed.

In the illustrated embodiment the apparatus 212 at the base station comprises a small local area network (LAN) 220 interconnecting a server 214 and computers 216 and 218. The base station 212 is coupled to the PSTN 208 and may be co-located with the management computer 2 10.

As illustrated, the server 214 includes a DTNIF modem and an interactive voice response unit for interactive signaling with a payphone and its user. Server 21 therefore preferably includes software to access digitally stored voice messages and to play these over the PSTN 208 to a payphone via a modem. Server 214 also preferably includes software means to set up the special function key buttons 24 to access the desired service provider or providers. Preferably computer 218 is configured to identify a user, the service required, and to authorise payment, and computer 216 is configured to acquire transaction data.

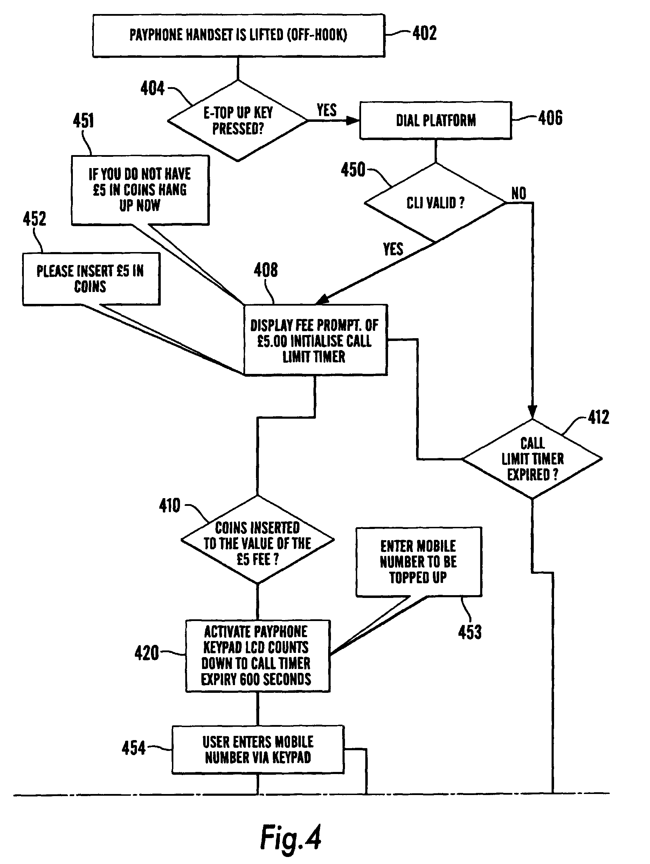

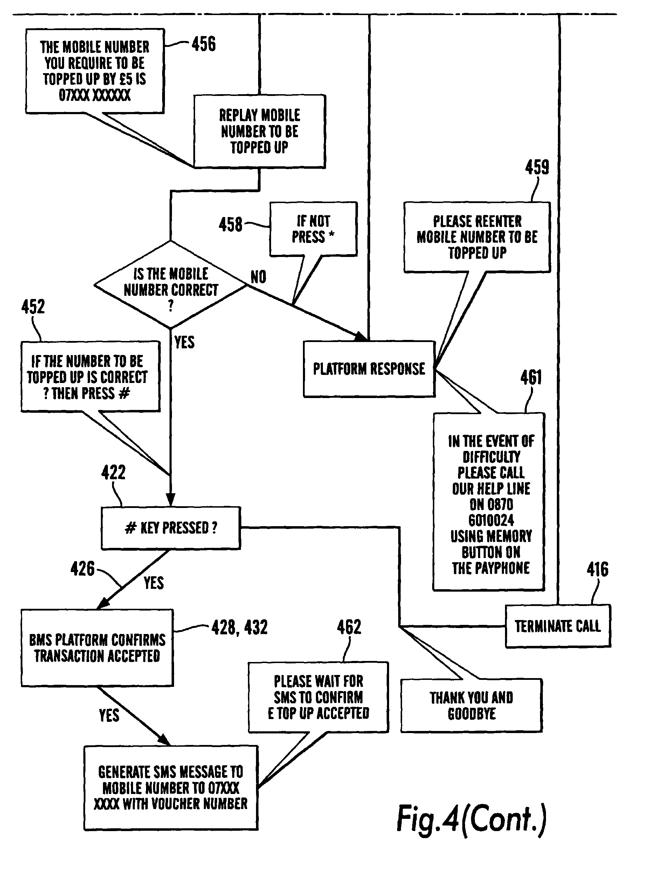

We now refer to Figure 4 which shows a block diagram of the procedure in a preferred embodiment of the invention for payment to top-up a prepaid mobile phone. Prepaid mobile phones have become very popular since they allow people to pay in advance for telephone time and top-up that time as and when required. The normal technique for doing so is to go to a telephone shop and pay for and obtain a sealed card which when opened gives a code number which can then be typed into the mobile phone to access the mobile phone operator and thereby increase the credit on that mobile telephone account by the relevant amount. Clearly there are disadvantages with such a system, the most important of which is that the relevant retail outlets or shops are not open at all times, and there is of course the cost of employing someone in the retail outlet to deal with this arrangement.

The arrangement as described in Figure 2 can be used but Figure 4 shows an arrangement which is specifically designed for this use. Similar parts in Figure 4 to the parts shown in Figure 2 are numbered similarly (e.g. 102 m Figure 2 = 402 in Figure 4, etc.), and the general procedure is similar to that shown in Figure 2 and will not be described. We will have, however, describe the differences and improvements.

In 406, the platform is the service provider. At 450 the platform ascertains whether the command line interface is valid before proceeding to step 408, 451 and 452 are audio or visual messages provided to the user at step 408. Similarly, 453 is the audio or visual message provided to the user at step 420.

After step 420, the user enters his/her mobile telephone number via the keypad at step 454, and then the number is replayed to the user via a audio or visible message 456. If the number is correct (which may be checked by the user pressing the relevant key at step 422), an audio or visual message 457 is displayed. If the number is not correct, then the message 458 is displayed and the platform response ten causes the message 459 and/or 461 to be displayed so as to cause the user to re-enter the number at step 454 or otherwise. Step 428/432 are combined in the present diagram, and if the platform confirms that the transaction is accepted, it partly generates an SMS message to the mobile number to cause the mobile telephone operator to credit the relevant account, the message 462 being played or displayed.

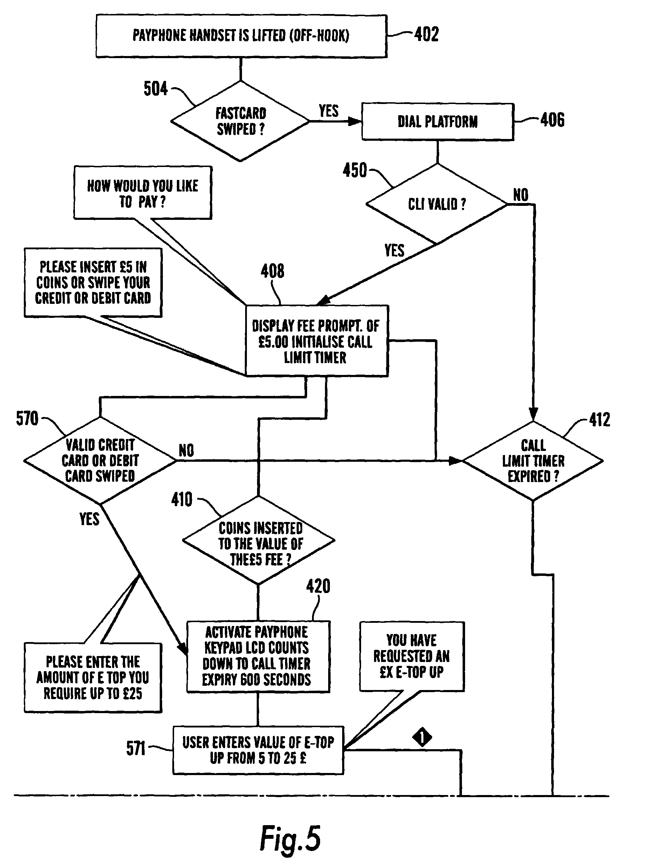

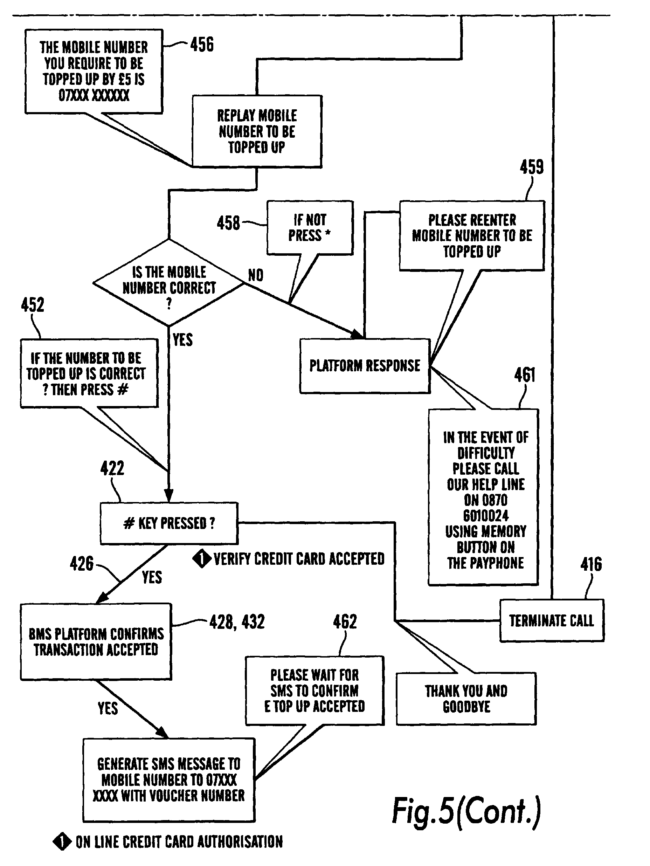

The arrangement shown in Figure 5 is identical to that shown in Figure 4 except that as follows. This arrangement is to be used with the system in which the user of the mobile phone, when purchasing the phone, is given a so-called "fast-card". This is a card somewhat similar to a debit or credit card with a magnetic stripe with relevant information embedded in that stripe. It enables identification of the user of the telephone. In this case, the fast-card is swiped through the swiping apparatus after the handset has been lifted (see 504), which electronically passes to the apparatus the information regarding the mobile phone number and other information as desired. Effectively, this replaces step 454.

In addition to that difference, it is possible to provide the necessary sum of money via a credit card using the swiping apparatus. The valid credit card or debit card is swiped at step 570 which requires the addition of step 571 at which the user inserts the value of credit to be taken from the credit card.

Whilst Figures 4 and 5 specifically relate to the topping up of credit on a prepaid mobile phone, a similar or analogous system may be used for providing other services or providing goods as previously described.

The skilled person will understand that other distributions of functions between the elements of the network are possible. For systems with a small number of payphones all the functions may be provided by a single computer, but with larger numbers of payphones (say 1000+ payphones) distribution of the functions over a LAN is preferable to provide the necessary capacity.

The base station is linked to one or more service providers 226 and 228 by high speed links 222 and 224 respectively. Alternatively the functions of the base station may be provided directly by the service provider(s). The requirements for links 222 and 224 will depend upon the level of traffic. For low levels of traffic the normal PSTN may be used, although dial-up links may not provide enough speed for some applications. Alternatively other conventional forms of connection such as ISDN, X25 and/or dedicated line connections can be used. Preferably the base station and service provider functions are separately managed, the base station advantageously being managed by the person or company responsible for managing the payphones.

No doubt other effective arrangements will occur to those skilled in the art and it is to be understood hat the invention is not limited to the described embodiments.

## Claims

1. Apparatus for payment for goods and/or services comprising:
payment accepting apparatus for accepting from a user cash and/or a token with a cash value, said payment accepting apparatus being couplable to a telephone network; and
a base station, also couplable to the telephone network, for receiving telephone calls from the payment accepting apparatus;
the payment accepting apparatus having means operable to telephone the base station, to identify the user and to identify a provider of the goods and/or services;
the base station being further configured to receive from the payment accepting apparatus information indicating a value of cash and/or a token or tokens provided by the user and to make the information available to the provider of the goods and/or services.

2. Apparatus as claimed in claim 1 wherein the payment accepting apparatus is a payphone.

3. Apparatus as claimed in claim 1 or 2 wherein the base station is configured to check a telephone number of the payment accepting apparatus against a list of numbers to validate it.

4. Apparatus as claimed in any preceding claim wherein the payment accepting apparatus is further configured to communicate a security code to the base station for validation by the base station.

5. Apparatus as claimed in claim 4 wherein the base station is further configured to transmit a security code to the payment receiving apparatus.

6. Apparatus as claimed in any preceding claim wherein the means to identify the provider of goods and/or services comprises a telephone number of the base station.

7. Apparatus as claimed in any preceding claim wherein the payment receiving apparatus is configured to determine a total value of cash and/or tokens accepted from users of the apparatus on behalf of providers of goods and/or services and to communicate this to the base station.

8. Apparatus as claimed in any preceding claim wherein either the information received from the payment accepting apparatus or the information made available to the provider of the goods and/or services indicates a value which is no greater than a limit value.

9. Apparatus as claimed in any preceding claim wherein the goods and/or services are mobile telephone services and wherein the base station is further configured to enable authorisation of use of a mobile telephone by the user.

10. Payment accepting apparatus for use with the apparatus of any one of claims 1 to 9.

11. A base station for use with the apparatus of any one of claims 1 to 9.

12. Apparatus substantially as hereinbefore described with reference to Figures 1 to 3.

13. A method of payment for goods and/or services by a user, for use with payment accepting apparatus and a base station, both coupled to a telephone network; the method comprising the steps of:
controlling the payment accepting apparatus to originate a telephone call to the base station;
answering the telephone call at the base station;
identifying the user and a provider of the goods and/or services to the base station;
accepting, using the payment accepting apparatus, cash and/or a token with a cash value from the user;
transmitting, from the payment accepting apparatus to the base station, information indicating a value of cash and/or token or tokens provided by the user; and
making the information available to the provider of the goods and/or services.

14. A method as claimed in claim 13 further comprising the step of providing the goods and/or services to the user.

15. A method as claimed in claim 13 or 14 further comprising checking a telephone number of the payment accepting apparatus, using the base station, against a list of numbers to validate it.

16. A method as claimed in any one of claims 13 to 15 wherein the goods and/or services are mobile telephone services and wherein the base station authorises use of a mobile telephone by the user.

17. A payment authorisation system comprising payment accepting apparatus and first and second computer systems, operable to communicate with one another over a network;
the first computer system including means to acquire, from the payment accepting apparatus, information specifying an amount of money input by a user of the payment accepting apparatus and means to communicate this information to the second computer system;
the second computer system including means to authorise the provision of goods and/or services to the value of the amount of money input by the user.

18. A system as claimed in claim 17 wherein the first computer system further includes means to authenticate the identity of the payment accepting apparatus.

19. A system as claimed in claim 17 or 18 wherein the information from the payment accepting apparatus includes information identifying the user.

20. A system as claimed in claim 17, 18 or 19 wherein the second computer system includes means to authorise the user to make further use of a prepaid mobile telephone service.

21. A method as claimed in any one of claims 17 to 20 wherein the means to authorise the provision of goods and/or services includes means to credit an account held by the user.

22. A method of enabling access to a mobile telephone service comprising:
receiving money from a user of the service at a payment accepting apparatus;
communicating the value of money received, over a telephone network, to a base station; and
enabling access or additional access to the mobile telephone service, to the value of the money received.

23. A method as claimed in claim 22 further comprising authenticating the user's identity.

24. A method as claimed in claim 22 or 23 further comprising authenticating the identity of the payment accepting apparatus.
